# EUROPEAN PATENT SPECIFICATION

(11) **EP 1 773 913 B1**
(45) Date of publication and mention of the grant of the patent: **29.10.2008**
(21) Application number: 05773816.3
(22) Date of filing: 21.07.2005
(51) Int. Cl.: C08G 65/42, C08G 75/23, B01D 71/68

(54) **POLYSULFONE-POLYETHER BLOCKCOPOLYMERS, PROCESS TO SYNTHESIZE IT, MEMBRANES MADE THEREFROM**
POLYSULFON-POLYETHER-BLOCKCOPOLYMERE, SYNTHESEVERFAHREN DAFÜR, DAMIT HERGESTELLTE MEMBRANE
COPOLYMÈRE SÉQUENCÉ DE POLYSULFONE-POLYÉTHER, PROCESSUS POUR LE SYNTHÉTISER, MEMBRANES CONSTITUÉES DE CELUI-CI

(30) Priority: 22.07.2004 US 589848 P
(43) Date of publication of application: 18.04.2007
(73) Proprietor: Solvay Advanced Polymers, L.L.C., Alpharetta, GA 30005 (US)
(72) Inventor: SCHWAB, Thomas, H., Cumming, GA 30040 (US)
(74) Representative: Jacques, Philippe
(86) International application number: PCT/US2005/025944
(87) International publication number: WO 2006/012453

(56) References cited:
- EP-A- 0 739 925
- WO-A-97/22406
- US-A- 4 625 000

## Description

### REFERENCE TO RELATED APPLICATIONS

This application claims priority to U.S. provisional application 60/589,848, filed July 22, 2004, incorporated herein by reference.

The present invention relates to new polyarylethersulfone-polyalkylene glycol block copolymers which unexpectedly exhibit several properties at a very high level, in substantial progress with regard to the prior art polyarylethersulfone-polyalkylene glycol block copolymers.

Polysulfones (PS) and polyethersulfones (PES) are a class of hydrophobic polymers widely used today in the manufacture of flat sheet and hollow fiber membranes, which operate in the microfiltration range and the ultrafiltration range. Engineering plastics, such as polysulfones and polyethersulfones, are widely used due to their easy processability and their ability to produce membranes having a wide range of pore structures. Moreover, they possess good thermal stability and good resistance to acid and alkali. However, both PS and PES are inherently hydrophobic polymers and their applications in microfiltration and to a larger extent in ultrafiltration are somewhat limited by the difficulties encountered in wetting such membranes.

At the high pressures required to wet some ultrafiltration membranes, compression of the membranes may lead to an irreversible collapse of the pore structure and a loss of hydraulic permeability. Hydrophobic membranes like PS and PES are also prone to nonspecific protein adsorption by virtue of their large hydrophobic surfaces. In pharmaceutical and therapeutic applications (such as for instance in hemodialysis membranes) this may lead to rapid blockage of the pore diameters and fouling of the membrane.

One obvious solution to the above problem with hydrophobic polymers is to use hydrophilic polymers as membrane forming materials. However, such hydrophilic polymers, like cellulose, are limited in their use due to their poor chemical resistance and lack of processability.

Several efforts have been made in the past to modify the hydrophobic properties of membranes made from engineering plastics. These have included chemical modifications of pre-formed membranes, and the use of hydrophilic polymers as additives in the membrane forming process. Examples of chemically modifying preformed membranes include plasma treatment of the membranes to introduce hydrophilic groups on the surface, deposition of thin coatings of hydrophilic polymers on the surface of the hydrophobic membranes and the addition of hydrophilic polymers to the cast solution.

As an alternative, a wide range of hydrophilic polymers have been used as additives in polysulfones and polyethersulfones membrane formation. Water soluble polymers, such as polyethylene glycol (PEG) and polyvinyl pyrrolidone (PVP), have been largely used as pore formers in the manufacture of porous PS and PES membranes. Despite their success as pore formers, during membrane fabrication, a large amount of the PVP is extracted into the polymer coagulation solvent; thus only a limited portion of the foregoing additives, able to confer a lower interfacial tension to the membrane, remain in the membrane. Examples of preparing hydrophilic membranes by using hydrophilic polymers in the casting solution as additives include the use of polyvinyl pyrrolidone as described in U.S. Pat. No. 4,051,300 to Klein et al., and the use of polyethylene glycols as described in Japanese Patent No. 54-26283, and in U.S. Pat. No. 4,900,449 to Kraus et al.

In both these methods, a too low amount of the hydrophilic water soluble additive is retained in the membrane; furthermore, the additive often leaches out on prolonged use in aqueous environments. In addition to the above problem of leaching, the Kraus's additives are deemed to be useful only for polyethersulfone membranes; they would not produce wettable membranes with polysulfone membranes. Other notable references using similar approaches (via addition of PVP and/or PEG additives) include U.S. Pat. Nos. 5,232,597 to Eguchi and 5,340,480 to Kawata et al.

To cope with the requirements of chemical resistance, hydrolytic stability and thermal resistance, it has also been suggested to use block copolymers comprising a hydrophilic block and a hydrophobic block. Unlike prior art additives such as polyvinyl pyrrolidone (PVP) or polyethylene glycol (PEG) that are added to the hydrophobic-base polymer as pore formers, the block copolymers comprise chemically bound structural units which impart the required hydrophilicity and which are not extracted during separation or cleaning operations.

Thus, US Patent N° 5,911,880 discloses block copolymers comprising copolymers of polyarylethersulfones and polyethylene glycol to be used as additives in admixture with polysulfone (PS) or polyethersulfone (PES) for the manufacture of water wettable permselective membranes for use in hemodialysis, ultrafiltration and microfiltration application. In particular, this patent discloses copolymers comprising a segment of PS or PES of formulae (i) or (ii) here below:

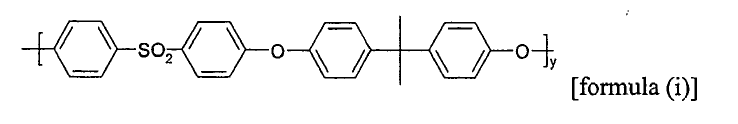

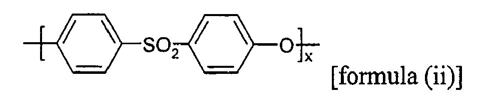

US Patent N° 6,365,678 discloses a process for the production of block copolymers of polyethers and sulfone polymers via a trans-etherification process, wherein the sulfone polymers consist of recurring units: 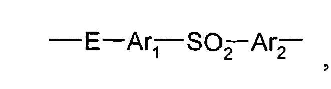 wherein E is a divalent diphenolate radical, and Ar₁ and Ar₂, the same or different, are C₆-C₅₀ difunctional aromatic radicals. In particular, the patent discloses notably block copolymers comprising segments of formulae (j) to (jjj) here below:

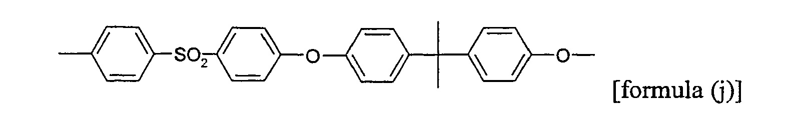

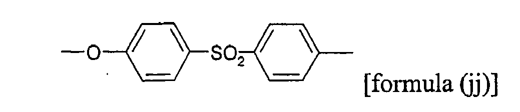

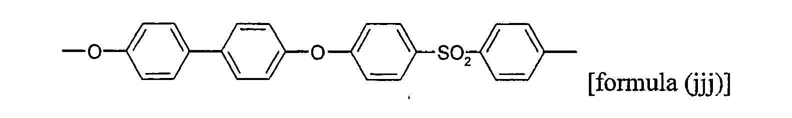

US patent N° 5,861,471 describes polysulfones/polyether block polycondensates, suitable for medical applications; this document discloses notably the preparation of block copolymers of PEG, TMC bisphenol and dichlorodiphenylsulfone, comprising the following polysulfone segment:

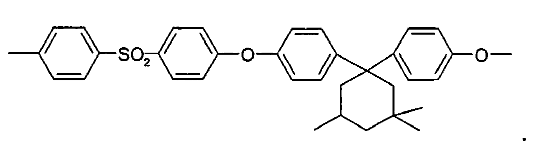

Nevertheless, the block copolymers of the prior art suffer from several drawbacks. First of all, their hydrolytic stability is unsatisfactory; medical devices, such as hemodialysis membranes, made from said polymers undergo substantial molecular weight degradation during steam sterilization, which reduce the life time and the overall performances of such articles. Moreover, due to their Tg of less than 200°C, said block copolymers are not suitable for use in water purification and gases separation membranes operating in thermally severe conditions. In view of the numerous drawbacks mentioned hereinabove, there is a strong need for a block copolymer which can be used notably in hemodialysis, ultrafiltration and microfiltration applications for water and/or gases, exhibiting a wide range of beneficial properties, in particular a high degree of wettability, an increased stability towards hydrolytic cleavage, and outstanding thermal performances.

To cope with all these requirements, at first, the present invention concerns a block copolymer as detailed in claim 1.

Non limitative examples of encompassed structures are:
(i) (A)-{(B)-(A)}ₙ₁ wherein n₁ is an integer equal to 1,2,3,4, 5, 6, 7, 8, 9, 10 or more ;
(ii) 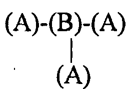
(iii) (A) - {(B)-(A)}ₙ₃ - {(B)-(C)}ₙ₄ where (C) is intended to denote a block different from blocks (A) and (B) obtained by a polycondensation reaction, and n₃ and n₄ are (identical or different) integers equal to 1,2,3,4, 5, 6, 7, 8, 9, 10 or more ; the n₃ diblocks {(B)-(A)} and the n₄ diblocks {(B)-(C)} can either be consecutive or randomly distributed.

The block copolymer of the invention advantageously possess outstanding hydrolytic stability and can notably withstand repeated steam sterilization cycles without undergoing degradation, in particular molecular weight degradation.

Moreover, the block copolymer of the invention, thanks to its outstanding thermal resistance, can be used in extreme conditions, i.e. in operations at temperature exceeding 150°C.

Blocks (B) are advantageously found between at least two blocks (A), preferably two blocks (A). Blocks (B), especially when they are incorporated into the block copolymer, provide advantageously long-term hydrophilicity and biocompatibility to the block copolymer.

Besides, blocks (B) are advantageously linked to blocks (A) by links consisting of the residue from a molecule of the aromatic dihalocompound, e.g. as in the following structures :

(A)-{O-(B)-ρ-(A)}ₙ₁

wherein :
- (B) is (Alk-O)ₙ, Alk being an alkylene group, O being an oxygen atom, n being an integer > 0,
- ρ is the residue from a molecule of the aromatic dihalocompound, and
- n₁ is an integer equal to 1,2,3,4, 5, 6, 7, 8, 9, 10 or more.

More particularly, when the aromatic dihalocompound is a 4,4'-bis(4-halophenylsulfonyl)biphenyl, notably a 4,4'-bis(4-chlorophenylsulfonyl)biphenyl, certain structures of interest are (A)-{O-(B)-ρ-(A)}ₙ₁ wherein n₁ is an integer equal to 1,2,3,4, 5, 6, 7, 8, 9, 10 or more, p is -Phi-SO₂-Phi-Phi--SO₂-Phi- and Phi denotes a p-phenylene group ; the structure (A)-O-(B)-ρ-(A) (corresponding to n₁=1) is of particular interest.

The number of blocks (A) is preferably at most two; more preferably, it is equal to two.

The number of blocks (B) is preferably at least one; more preferably, it is equal to one.

The block copolymer is advantageously free of blocks different from blocks (A) and (B).

Blocks (A) comprise preferably at least 90 mole % of recurring units (R1). More preferably, blocks (A) consist of recurring units (R1).

The aromatic dihalocompound complies with the general formula : 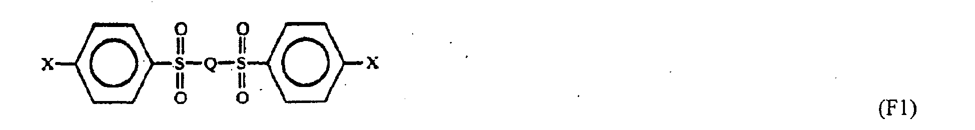 wherein X is a halogen, especially Cl, and Q is a divalent radical susceptible of resulting from the removal of two replaceable hydrogens from a molecule of formula QH₂, namely :

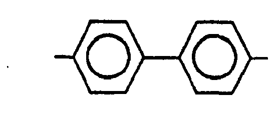

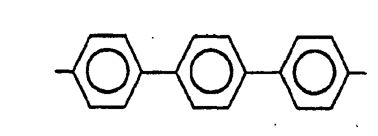

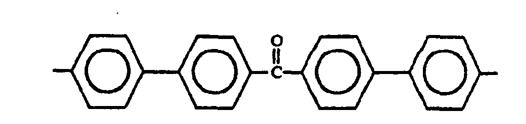

The aromatic dihalocompound comprises at least four aromatic rings. In addition, it comprises at most six, preferably at most four aromatic rings.

Most preferably, the aromatic dihalocompound complies with formula (F1) in which Q is

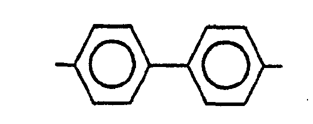

Any aromatic diol which is able to polymerize with the aromatic dihalocompound is suitable. Non limitative examples of such aromatic diols are 4,4'-biphenol (i.e. 4,4'-dihydroxybiphenyl), bisphenol A, 4,4'-dihydroxy-diphenylsulfone (also known as bisphenol S), hydroquinone, and 4,4'-dihydroxy-diphenylether.

The aromatic diol comprises advantageously at least two aromatic rings. In addition, it comprises advantageously at most two aromatic rings.

The aromatic diol is advantageously free from functional groups other than the - OH groups.

The most preferred aromatic diol is 4,4'-biphenol.

Blocks (A) consisting of the following recurring unit : 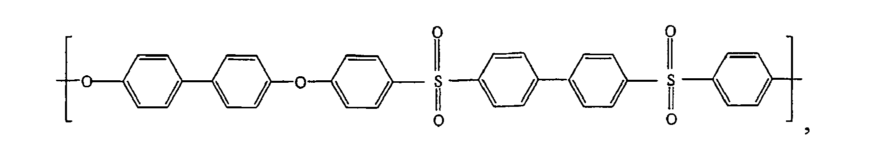 namely poly(biphenyl ether disulfone) blocks, gave the best results.

The block copolymer comprises advantageously at least 50 wt. % of block (A). In addition, the block copolymer comprises advantageously at most 90 wt. % of block (A).

Blocks (B) comprise preferably at least 90 mole % of recurring units (R2). More preferably, blocks (B) consist of recurring units (R2).

The alkylene oxide is preferably ethylene oxide and/or propylene oxide. More preferably, the alkylene oxide is ethylene oxide.

Blocks (B) have an average molecular weight in number of advantageously at least 500, and preferably at least 5,000. In addition, blocks (B) have an average molecular weight in number of advantageously at most 20,000, and preferably at most 12,000.

The block copolymer comprises advantageously at most 50 wt. % of block (B). In addition, the block copolymer comprises advantageously at least 10 wt. % of block (B).

A first class of preferred block copolymers consists of block copolymers comprising at least 10 wt. % and up to 15 wt. % of block (B). Block copolymers of this class would be notably suitable for manufacturing water and gas separation membranes with a low hydrophilicity level.

A second class of preferred block copolymers consists of block copolymers comprising more than 15 wt. % and up to 25 wt. % of block (B).

A third class of preferred block copolymers consists of block copolymers comprising more than 25 wt. % and up to 35 wt. % of block (B).

A fourth class of preferred block copolymers consists of block copolymers comprising more than 35 wt. % and up to 45 wt. % of block (B).

Excellent results were obtained with triblock (A)-O-(B)-ρ-(A) copolymers of formula : 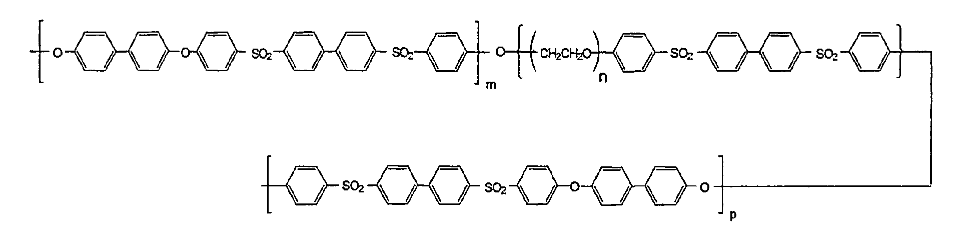 in which (B) is -(-CH₂-CH₂O-)-ₙ and p is -Phi-SO₂-Phi-Phi-SO₂-Phi- i.e. the residue from the aromatic dihalocompound, Phi is phenylene,
with weight proportions (A):(B) of from 55:45 to 90:10, notably with weight proportions (A):(B) of 60:40, 70:30, 80:20 and 90:10,
in which block (B) has an average molecular weight in number from 5,000 to 12,000, preferably from 8,000 to 10,000, and wherein m, n and p are integers greater than zero.

The block copolymer according to the present invention exhibits notably excellent chemical resistance, excellent hydrolytic stability and excellent thermal performance.

The present invention concerns also a process for synthesizing the above described block copolymer, wherein:
- block (A) is synthesized by nucleophilic displacement chemistry in an aprotic polymerization solvent, such as sulfolane or diphenylsulfone ;
- block (B) is incorporated into block (A) by transetherification.

The present invention concerns also a process for synthesizing the above described block copolymer, wherein pre-formed blocks (A) and (B) are reacted in the presence of a carbonate, in particular potassium carbonate, in an aprotic polymerization solvent, such as sulfolane or diphenylsulfone.

The present invention concerns also a polymer composition comprising the block copolymer as above described, and at least one other ingredient. Said other ingredient can be a polymer of the same type as block (A). It can also be notably another sulfone polymer such as a polysulfone, a polyethersulfone, a RADEL^{®} A sulfone polymer as commercialized by SOLVAY ADVANCED POLYMERS, L.L.C or a polyphenylsulfone. It can also be a polymer other than a sulfone polymer such as polyvinyl pyrrolidone. It can also be a non polymeric ingredient such as a solvent.

An example of such polymer composition is a dope solution suitable for hollow fiber spinning consisting of a triblock copolymer (A)-O-(B)-ρ-(A) copolymer as above illustrated, e.g. with (A):(B) = 80:20, polyvinylpyrrolidone and a spinning solvent.

The block copolymer of the composition according to the present invention has the same characteristics as the block copolymer according to the present invention, in all its embodiments, as above detailed.

The polymer composition comprise advantageously more than 1 wt. %, preferably more than 10 wt. %, still more preferably more than 50 wt. %, and the most preferably more than 90 wt. %, related to the total weight of the composition, of the block copolymer.

The invention concerns also an article comprising the block copolymer as above described or the polymer composition as above described.

The article is advantageously a membrane.

The block copolymer and the polymer composition comprised in the article according to the present invention have the same characteristics respectively as the block copolymer and the polymer composition according to the present invention, in all their embodiments, as above detailed.

The invention concerns also a process for purifying a liquid, preferably water or blood, more preferably water, which comprises using a membrane as above described.

The invention concerns also a process for separating gases, which comprises using a membrane as above described.

The membrane used in the processes according to the present invention has the same characteristics as the membrane according to the present invention, in all its embodiments, as above detailed.

### Example 1 (preparation of a block copolymer according to the invention).

A one-liter, 4-neck resin kettle with Kalrez o-ring was equipped through its center neck with an overhead stirrer attached to a stainless steel anchor-type agitator. A Claisen adapter fitted with a Barrett trap and a refrigerated water-cooled Graham condenser was attached to a side neck, and a thermocouple thermometer attached to a temperature controller was inserted into the reactor through the Claisen adapter. A gas inlet tube and a stopper were placed in the other necks of the resin kettle. The reactor was placed in an oil bath, filled with Dow Corning 550 heat transfer fluid, and fitted with heaters connected to a temperature controller.

4,4'-biphenol, 35.03 pbw (parts by weight), 4,4'-bis(4-chlorophenylsulfonyl)biphenyl (96.52 pbw), nominal 8000 molecular weight polyethylene glycol (29.00 pbw), and anhydrous potassium carbonate (29.15 pbw) of average particle size less than 80 µm were charged to the reactor. The agitator was started at 50 rpm and the reactor was degassed by evacuating using a vacuum pump and then filling with nitrogen. The degassing operation was repeated two more times. Anhydrous sulfolane (372.86 pbw) and monochlorobenzene (124.29 pbw) were then charged to the reactor. The agitator speed was increased to 100 rpm and a steady stream of nitrogen through the reactor solution was started. After approximately 15 minutes of nitrogen sparging, heating was initiated and the stirring speed increased to 150-200 rpm, taking care not to splash the reactor solution above the heated zone of the reactor wall. As the temperature of the reaction mixture increased, chlorobenzene, along with the water formed as a reaction by-product, distilled as an azeotrope and was collected in the Barrett trap. The collected distillate was not returned to the resin kettle. When the viscosity started to build, the agitator speed was increased to 450-500 rpm.

The predetermined reaction temperature, here 230°C, was attained within about 70 minutes after initiating the heating cycle, and was maintained for the time needed to reach the target molecular weight, namely about 5 hours (the Applicant observed that longer reaction times were required for particular other combinations of monomers and reactants, and when other reactant stoichiometries were used). The solution viscosity of the reaction mass increased as the polymerization proceeds, thereby increasing the load on the agitator motor to maintain a fixed speed of rotation. The progress of the polymerization reaction was followed by monitoring the corresponding increase in load on the agitator motor circuit. A polymer having the desired molecular weight was obtained ; the concentration of the polymer in the sulfolane was 28 wt. %.

Then, the polymerization process was quenched by adding sulfolane (448.81 pbw) slowly from an addition funnel to cool the reaction mixture, typically to 100-120°C ; heat input to the resin kettle was terminated. The diluted polymer solution then comprised 145.00 pbw (theoretical yield) of the polymer dissolved in sulfolane at a concentration of approximately 15 wt%, together with suspended by-product salts. The reactor solution was then filtered to remove the by-product salts. Filtration was accomplished using a 2-2.7micron filter medium in a stainless steel pressure filter operated at 90-100 psig nitrogen pressure. To ensure long-term storage stability of the polymer solution, with no polymer precipitation and/or solidification of the filtered reaction mass, the effluent from the pressure filter was transferred into a glass jar containing 845.83 pbw N-methylpyrrolidone to achieve an overall polymer concentration of 8 % by weight.

After salt removal, the polymer solution at about 40°C, was acidified to pH = 3 with oxalic acid. The polymer was then coagulated by slowly adding 100 pbw of the 8 wt. % cooled solution to 400 pbw of methanol in a blender under high speed agitation. The precipitate was recovered by vacuum filtration, returned to the blender, and given an additional washing using 400 pbw methanol. The washed precipitate was then slurried for two hours at about 35°C under mechanical agitation in 500 pbw deionized water acidified with oxalic acid to pH = 3. The washed precipitate is recovered by vacuum filtration and then dried in a vacuum oven (about 27 in Hg) at about 110°C, with an air-bleed.

The block copolymer exhibited a relative viscosity (RV) equal to 0.78 dl/g with 17.1 wt% polyethylene oxide incorporated into the polymer backbone. The glass transition temperature of the block copolymer was 243.5°C. The block copolymer exhibited an (A)-O-(B)-ρ-(A) tri-block structure with no aliphatic end-groups arising from polyethylene oxide, wherein:
- recurring units of block (A) are : 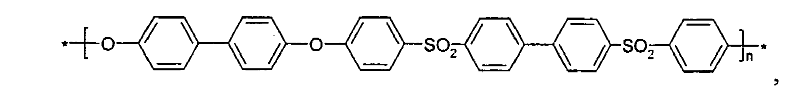
- recurring units of block (B) are: 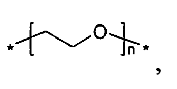
- ρ is the residue from 4,4'-bis(4-chlorophenylsulfonyl)biphenyl, namely -Phi-SO₂-Phi-Phi-SO₂-Phi-, Phi denoting a p-phenylene group.

The block copolymer prepared in this example was subjected to two steam sterilization cycles carried out at 125°C and 19 psig steam pressure for 30 minutes per cycle. The reduced viscosities of the block copolymer after steam sterilization were 0.77 dl/g and 0.76 dl/g, respectively.

### Example 2 (according to the invention). The procedure of example 1 was repeated but using as raw materials the following:

| | Availability | Properties | Weight |
|---|---|---|---|
| polyethylene glycol | Aldrich PEG | Nominal Mₙ = 8 000 Melting point = 62 °C | 29.00 g |
| 4,4'-biphenol | Honshu | Chemical > 99.9 % 4,4'-isomer | 35.02 g |
| 4,4'-bis(4-chlorophenylsulfonyl)biphenyl | | > 99.7 % 4,4'-isomer | 96.52 g |
| K₂CO₃ | Armand Products EF-80 | APS¹ = 50.7 µm | 30.47 g |

| | | | |
|---|---|---|---|
| 1 - APS: Average Particle Size | | | |

The block copolymer exhibited a relative viscosity (RV) equal to 0.93 dl/g with 17.4 wt% polyethylene oxide incorporated into the polymer backbone. The glass transition temperature of the block copolymer was 238.8°C.

Examples 3a, 3b, 3c and 3d (according to the invention). Molecular weight was further controlled by extending the reaction time (example 3a), by reducing the reaction time (example 3b), by the use of a higher reaction temperature (example 3c), or by the use of a lower reaction temperature (example 3d). Poly(biphenyl ether disulfone)-polyethylene oxide block copolymers having a reduced viscosity in the range of from 0.5-1.0 dl/g were prepared in this manner.

### Example 4 (according to the invention). The procedure of example 1 was repeated but using as raw materials the following:

| | Availability | Properties | Weight |
|---|---|---|---|
| polyethylene glycol | BREOX® 8000 Pharmaceutical grade | Nominal Mₙ = 8756 | 29.00 g |
| 4,4'-biphenol | Honshu Chemical | > 99.9 % 4,4'-isomer | 35.03 g |
| 4,4'-bis(4-chlorophenylsulfonyl)biphenyl | | > 99.7 % 4,4'-isomer | 96.52 g |
| K₂CO₃ | Armand Products EF-80 | APS¹ = 50.7 µm | 27.82 g |

| | | | |
|---|---|---|---|
| 1 - APS: Average Particle Size | | | |

The block copolymer exhibited a relative viscosity (RV) equal to 0.83 dl/g with 11.4 wt% polyethylene oxide incorporated into the polymer backbone. The glass transition temperature of the block copolymer was 249.3°C.

Comparative example 1. The procedure of example 1 was repeated for preparing a triblock polymer having the (A)-O-(B)-ρ-(A) structure, wherein :
- recurring units of (A) are: 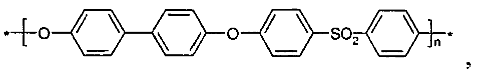
- recurring units of (B) are: 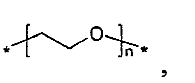
- p is the residue from 4,4'-dichlorodiphenylsulfone, namely -Phi-SO₂-Phi- , Phi denoting a p-phenylene group,
using as raw materials the following:

| | Availability | Properties | Weight |
|---|---|---|---|
| polyethylene glycol | BREOX® 8000 Pharmaceutical grade | Nominal Mₙ = 8756 | 29.00 g |
| 4,4'-biphenol | Honshu Chemical | > 99.9 % 4,4'-isomer | 53.94 g |
| 4,4'-dichlorodiphenyl sulfone (DCDPS) | Solvay Advanced Polymers ULTIMATE^{™} grade | 99.92 % 4,4'-isomer | 84.23 g |
| K₂CO₃ | Armand Products EF-80 | APS¹ = 50.7 µm | 44.59 g |

| | | | |
|---|---|---|---|
| 1 - APS: Average Particle Size | | | |

The block copolymer exhibited a relative viscosity (RV) equal to 0.91 dl/g with 17.2 wt% polyethylene oxide incorporated into the polymer backbone. The glass transition temperature of the block copolymer was 192.0°C.

Comparative example 2. The procedure of example 1 was repeated for preparing a triblock polymer having the (A)-O-(B)-ρ-(A) structure, wherein :
- recurring units of (A) are 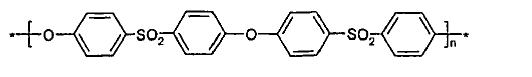
- recurring units of (B) are: 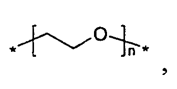
- ρ is the residue from 4,4'-dichlorodiphenylsulfone, namely -Phi-SO₂-Phi- , Phi denoting a p-phenylene group,
using as raw materials the following :

| | Availability | Properties | Weight |
|---|---|---|---|
| polyethylene glycol | BREOX® 8000 Pharmaceutical grade | Nominal Mₙ = 8756 | 29.00 g |
| 4,4'-bisphenol S | Clariant Polymer grade | > 99.7 % 4,4'-isomer | 62.50 g |
| 4,4'-dichlorodiphenyl sulfone (DCDPS) | Solvay Advanced Polymers ULTIMATE^{™} grade | 99.92 % 4,4'-isomer | 72.75 g |
| K₂CO₃ | Armand Products EF-80 | APS¹ = 50.7 µm | 35.36 g |

| | | | |
|---|---|---|---|
| 1 - APS: Average Particle Size | | | |

The block copolymer exhibited a relative viscosity (RV) equal to 0.71 dl/g with 16.1 wt% polyethylene oxide incorporated into the polymer backbone. The glass transition temperature of the block copolymer was 186.3°C.

Comparative example 3. The procedure of example 1 was repeated for preparing a triblock polymer having the (A)-O-(B)-ρ-(A) structure, wherein :
- recurring units of (A) are 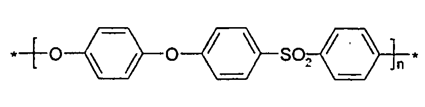 and 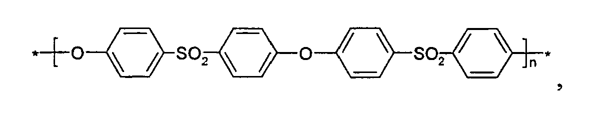
- recurring units of (B) are: 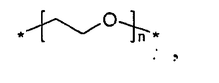
- ρ is the residue from 4,4'-dichlorodiphenylsulfone, namely -Phi-SO₂-Phi- , Phi denoting a p-phenylene group,
using as raw materials the following:

| | Availability | Properties | Weight |
|---|---|---|---|
| polyethylene glycol | Aldrich PEG | Nominal Mₙ = 8 000 Melting point = 62 °C | 29.00 g |
| 4,4'-bisphenol S | Clariant Polymer grade | > 99.7 % 4,4'-isomer | 50.70 g |
| hydroquinone | Eastman Photographic grade | Purity: 99.7 % | 7.44 g |
| 4,4'-dichlorodiphenyl sulfone (DCDPS) | Solvay Advanced Polymers ULTIMATE^{™} grade | 99.92 % 4,4'-isomer | 78.61 g |
| K₂CO₃ | Armand Products - EF-80 | APS = 50.7 µm | 39.34 g |

| | | | |
|---|---|---|---|
| 1 - APS: Average Particle Size | | | |

The block copolymer exhibited a relative viscosity (RV) equal to 0.86 dl/g with 20.0 wt% polyethylene oxide incorporated into the polymer backbone. The glass transition temperature of the block copolymer was 159.0°C.

Comparative example 4. The procedure of example 1 was repeated for preparing a triblock polymer having the (A)-O-(B)-ρ-(A) structure, wherein :
- recurring units of (A) are 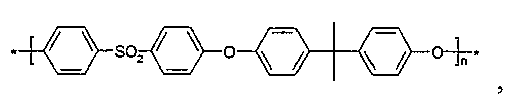
- recurring units of (B) are: 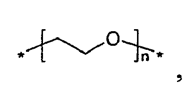
- p is the residue from 4,4'-dichlorodiphenylsulfone, namely -Phi-SO₂-Phi- , Phi denoting a p-phenylene group,
using as raw materials the following:

| | Availability | Properties | Weight |
|---|---|---|---|
| polyethylene glycol | BREOX® 8000 Pharmaceutical grade | Nominal Mₙ = 8756 | 14.66 g |
| 4,4'-bisphenol A | SUNOCO | > 99.7% 4,4'-isomer | 68.07 g |
| 4,4'-dichlorodiphenyl sulfone (DCDPS) | Solvay Advanced Polymers ULTIMATE^{™} grade | 99.92 % 4,4'-isomer | 86.15 g |
| K₂CO₃ | Armand Products - EF-80 | APS¹ = 50.7 µm | 51.83 g |

The block copolymer exhibited a relative viscosity (RV) equal to 1.15 dl/g with 10.0 wt% polyethylene oxide incorporated into the polymer backbone. The glass transition temperature of the block copolymer was 135.5°C.

### Steam Sterilization trials

Samples of polyarylethersulfone-polyethylene glycol block copolymers as above described were submitted to repeated steam sterilization cycles carried out at 125°C and 19 psig steam pressure for 30 minutes per cycle. Glass transition temperatures, polyethylene glycol (PEG) contents and reduced viscosities of the block copolymers before and after steam sterilization cycles are detailed in table 1 here below.

**Table 1**

| Block copolymer | Tg (°C)¹ | PEG² content (wt %) | Reduced viscosity³ (dl/g) | | |
|---|---|---|---|---|---|
| | | | Initial | After 1^{st} cycle | After 2^{nd} cycle |
| Example 1⁴ | 243.5 | 17.1 | 0.78 | 0.77 | 0.76 |
| Example 2⁴ | 238.8 | 17.4 | 0.93 | 0.93 | 0.92 |
| Example 4⁴ | 249.3 | 11.4 | 0.83 | 0.80 | 0.80 |
| Comparative example 1⁵ | 192.0 | 17.2 | 0.91 | 0.85 | 0.82 |
| Comparative example 2⁶ | 186.3 | 16.1 | 0.71 | 0.55 | 0.49 |
| Comparative example 3⁷ | 159.0 | 20.0 | 0.86 | 0.67 | 0.62 |
| Comparative example 4⁸ | 135.5 | 10.0 | 1.15⁹ | 0.85⁹ | 0.61⁹ |

| | | | | | |
|---|---|---|---|---|---|
| 1- Glass transition temperature measured on coagulated polymer sample by Differential Scanning Calorimetry according to ASTM D 3418 Standard. 2 - PEG content has been determined by ¹H-NMR spectroscopy. 3 - Reduced viscosity measured as 0.2 g polymer in 100 ml of NMP at 25°C. 4 - Block (A) the recurring units of which are of formula: 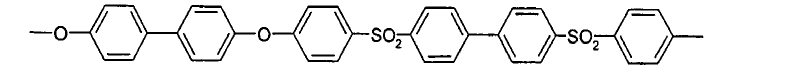 5 - Block (A) the recurring units of which are of formula: 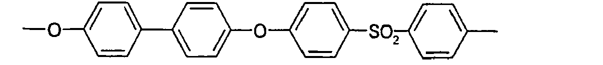 6 - Block (A) the recurring units of which are of formula: 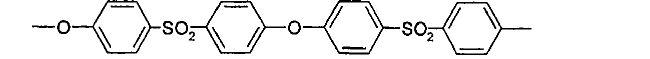 7 - Block (A) the recurring units of which are of formulae: 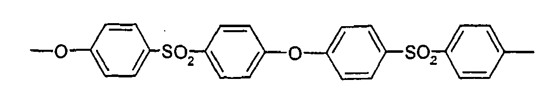 and 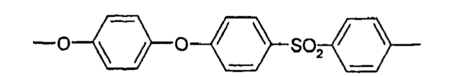 8 - Block (A) the recurring units of which are of formula: 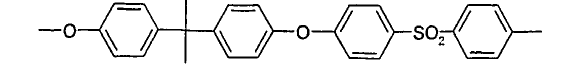 9 - Reduced viscosity measured as 0.2 g polymer in 100 ml of CHCl₃ at 25°C | | | | | |

.

Block copolymers according to the invention showed essentially no molecular weight degradation after both one and two sterilization cycles, while comparative block copolymers underwent severe degradation under same conditions.

Block copolymers according to the invention exhibited glass transition temperature largely exceeding 200°C, thus enabling use of these materials in severe temperature conditions. On the contrary, at comparable PEG content, comparative block copolymers showed lower Tg, making them unsuitable for high temperature applications.

## Claims

1. Block copolymer comprising:
- at least one block (block (A)) of a polymer comprising at least 50 mole % of recurring units (R1) formed by the polycondensation reaction between at least one aromatic diol and at least one aromatic dihalocompound complying with formula (F1) : 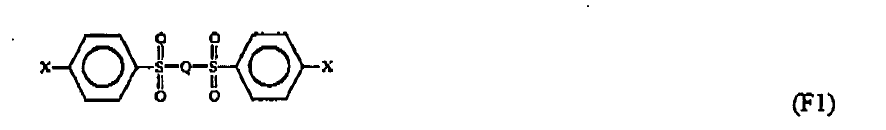
wherein X is a halogen, and Q is 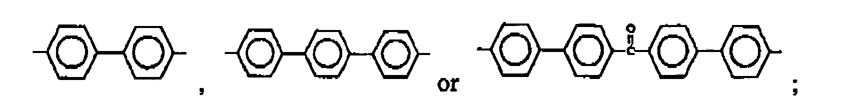
- and at least one block of a polymer comprising at least 50 mole % of recurring units (R2) formed by the polymerization of at least one alkylene oxide (block (B));

2. Block copolymer according to claim 1, **characterized in that** Q is

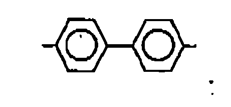

3. Block copolymer according to any one of the preceding claims, **characterized in that** the diol is chosen among 4,4'-biphenol (i.e. 4,4'-dihydroxybiphenyl), bisphenol A, 4,4'-dihydroxy-diphenylsulfone (also known as bisphenol S), hydroquinone, and 4,4'-dihydroxy-diphenylether.

4. Block copolymer according to claim 3, **characterized in that** the diol is 4,4'-bisphenol (i.e. 4,4'-dihydroxybiphenyl).

5. Block copolymer according to any one of the preceding claims, **characterized in that** the alkylene oxide is ethylene oxide and/or propylene oxide.

6. Block copolymer according to any one of the preceding claims, **characterized in that** the block copolymer comprises at least 50 wt. % of block (A),

7. Block copolymer according to any one of the preceding claims, **characterized in that** the block copolymer comprises at most 90 wt, % of block (A).

8. Block copolymer according to any one of the preceding claims, **characterized in that** the block copolymer comprises at most 50 wt. % of block (B).

9. Block copolymer according to any one of the preceding claims, **characterized in that** the block copolymer comprises at least 10 wt. % of block (B).

10. Block copolymer according to claim 1, **characterized in that** it comprises, as sole blocks, blocks (A) and at least one block (B), the structure of said block copolymer being chosen from :
- (A)-{(B)-(A)}ₙ₁ wherein n₁ is an integer equal to 1, 2, 3, 4, 5, 6, 7, 8, 9, 10 or more;

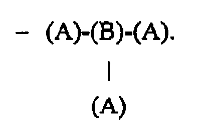

11. Block copolymer according to claim 1, **characterized in that** it comprises, as sole blocks, two blocks (A) and one block (B),

12. Block copolymer according to claim 1, **characterized in that** it is a triblock (A)-(O)-(B)-ρ-(A) copolymer of formula : 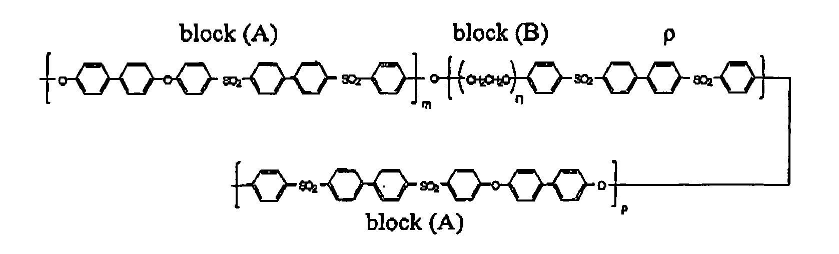 in which (B) is -(-CH₂-CH₂O-)-ₙ and p is -Phi-SO₂-Phi-Phi-SO₂-Phi-, Phi is phenylene,
with weight proportions (A):(B) of from 55:45 to 90:10, and in which block (B) has an average molecular weight in number from 5,000 to 12,000 and wherein m, n and p are integers greater than zero.

13. Process for synthesizing the block copolymer according to anyone of the preceding claims, **characterized in that :**
- block (A) is synthesized by nucleophilic displacement chemistry in an aprotic polymerization solvent ;
- block (B) is incorporated into block (A) by transetherification.

14. Polymer composition comprising the block copolymer according to anyone of claims 1 to 12, and at least one other ingredient.

15. Article comprising the block copolymer according to anyone of claims 1 to 12 or the polymer composition according to claim 14.

16. Article according to claim 15, **characterized in that** it is a membrane.

17. Process for purifying a liquid, **characterized in that** it comprises using the article according to claim 16.

18. Process according to claim 17, **characterized in that** the liquid is water.

19. Process for separating gases, **characterized in that** it comprises using the article according to claim 16.

## Patentansprüche

1. Blockcopolymer, enthaltend :
- mindestens einen Block (Block (A)) aus einem Polymer mit mindestens 50 Mol-% durch die Polykondensationsreaktion zwischen mindestens einem aromatischen Diol und mindestens einer aromatischen Dihalogenverbindung mit der Formel (F1) : 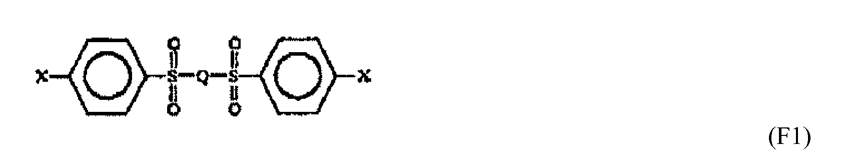
worin X für ein Halogen steht und Q für 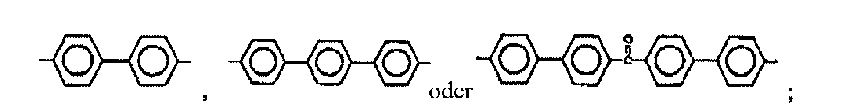 steht, gebildeten wiederkehrenden Einheiten (R1) und
- mindestens einen Block aus einem Polymer mit mindestens 50 Mol-% durch Polymerisation mindestens eines Alkylenoxids gebildeten wiederkehrenden Einheiten (R2) (Block (B)).

2. Blockcopolymer nach Anspruch 1, **dadurch gekennzeichnet, daß** Q für 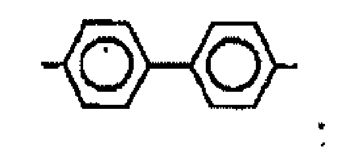 steht.

3. Blockcopolymer nach einem der vorhergehenden Ansprüche, **dadurch gekennzeichnet, daß** das Diol unter 4,4'-Biphenol (d.h. 4,4'-Dihydroxybiphenyl), Bisphenol A, 4,4'-Dihydroxydiphenylsulfon (das auch als Bisphenol S bekannt ist), Hydrochinon und 4,4'-Dihydroxydiphenylether ausgewählt ist.

4. Blockcopolymer nach Anspruch 3, **dadurch gekennzeichnet, daß** es sich bei dem Diol um 4,4'-Biphenol (d.h. 4,4'-Dihydroxybiphenyl) handelt.

5. Blockcopolymer nach einem der vorhergehenden Ansprüche, **dadurch gekennzeichnet, daß** es sich bei dem Alkylenoxid um Ethylenoxid und/oder Propylenoxid handelt.

6. Blockcopolymer nach einem der vorhergehenden Ansprüche, **dadurch gekennzeichnet, daß** das Blockcopolymer mindestens 50 Gew.-% Block (A) enthält.

7. Blockcopolymer nach einem der vorhergehenden Ansprüche, **dadurch gekennzeichnet, daß** das Blockcopolymer höchstens 90 Gew.-% Block (A) enthält.

8. Blockcopolymer nach einem der vorhergehenden Ansprüche, **dadurch gekennzeichnet, daß** das Blockcopolymer höchstens 50 Gew.-% Block (B) enthält.

9. Blockcopolymer nach einem der vorhergehenden Ansprüche, **dadurch gekennzeichnet, daß** das Blockcopolymer mindestens 10 Gew.-% Block (B) enthält.

10. Blockcopolymer nach Anspruch 1, **dadurch gekennzeichnet, daß** es als einzige Blöcke Blöcke (A) und mindestens einen Block (B) enthält, wobei die Struktur des Blockcopolymers unter :
- (A)-{(B)-(A)}ₙ₁, worin n₁ für eine ganze Zahl mit einem Wert von 1, 2, 3, 4, 5, 6, 7, 8, 9, 10 oder mehr steht; 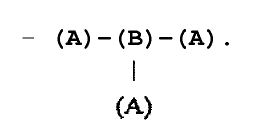 ausgewählt ist.

11. Blockcopolymer nach Anspruch 1, **dadurch gekennzeichnet, daß** es als einzige Blöcke zwei Blöcke (A) und einen Block (B) enthält.

12. Blockcopolymer nach Anspruch 1, **dadurch gekennzeichnet, daß** es sich um ein (A)-(O)-(B)-ρ-(A)-Triblockcopolymer der Formel: 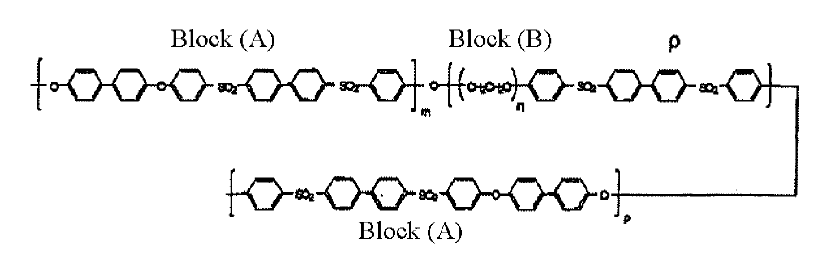 worin (B) für -(-CH₂-CH₂O-)-ₙ steht und p für -Phi-SO₂-Phi-Phi-SO₂-Phi steht, wobei Phi Phenylen bedeutet,
mit Gewichtsanteilen (A):(B) von 55:45 bis 90:10 handelt und worin Block (B) ein zahlenmittleres Molekulargewicht von 5.000 bis 12.000 aufweist und m, n und p für ganze Zahlen größer null stehen.

13. Verfahren zur Synthese des Blockcopolymers nach einem der vorhergehenden Ansprüche, **dadurch gekennzeichnet, daß** man :
- Block (A) durch nucleophile Substitutionschemie in einem aprotischen Polymerisationslösungsmittel herstellt;
- Block (B) durch Umesterung in Block (A) einführt.

14. Polymerzusammensetzung, enthaltend das Blockcopolymer nach einem der Ansprüche 1 bis 12 und mindestens einen anderen Bestandteil.

15. Gegenstand, umfassend das Blockcopolymer nach einem der Ansprüche 1 bis 12 oder die Polymerzusammensetzung gemäß Anspruch 14.

16. Gegenstand nach Anspruch 15, **dadurch gekennzeichnet, daß** es sich um eine Membran handelt.

17. Verfahren zum Reinigen einer Flüssigkeit, **dadurch gekennzeichnet, daß** man dabei den Gegenstand nach Anspruch 16 verwendet.

18. Verfahren nach Anspruch 17, **dadurch gekennzeichnet, daß** es sich bei der Flüssigkeit um Wasser handelt.

19. Verfahren zur Trennung von Gasen, **dadurch gekennzeichnet, daß** man dabei den Gegenstand nach Anspruch 16 verwendet.

## Revendications

1. Copolymère séquencé comprenant :
- au moins une séquence (séquence (A)) d'un polymère renfermant au moins 50 % en moles de motifs récurrents (R1) formés par la réaction de polycondensation entre au moins un diol aromatique et au moins un composé dihalogéno aromatique conforme à la formule (F1) : 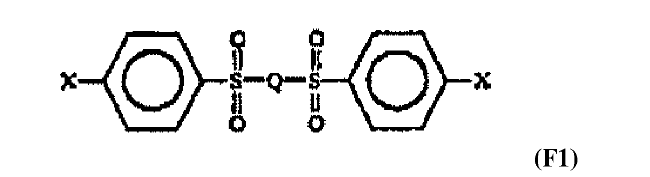
dans laquelle X est un atome d'halogène et Q est un groupe 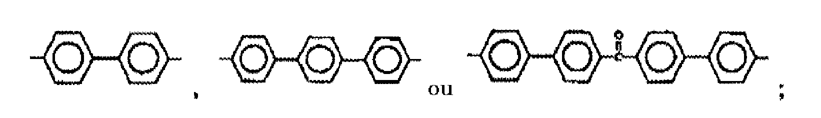
- et au moins une séquence d'un polymère renfermant au moins 50 % en moles de motifs récurrents (R2) formés par la polymérisation d'au moins un oxyde d'alkylène (séquence (B)).

2. Copolymère séquencé selon la revendication 1, **caractérisé en ce que** Q est un groupe

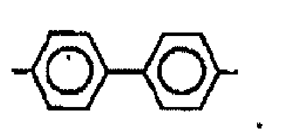

3. Copolymère séquencé selon l'une quelconque des revendications précédentes, **caractérisé en ce que** le diol est choisi parmi le 4,4'-biphénol (c'est-à-dire, le 4,4'-dihydroxybiphényle), le bisphénol A, la 4,4'-dihydroxydiphénylsulfone (également connue sous le nom de bisphénol S), l'hydroquinone et l'éther 4,4'-dihydroxydiphénylique.

4. Copolymère séquencé selon la revendication 3, **caractérisé en ce que** le diol est le 4,4'-biphénol (c'est-à-dire, le 4,4'-dihydroxybiphényle).

5. Copolymère séquencé selon l'une quelconque des revendications précédentes, **caractérisé en ce que** l'oxyde d'alkylène est l'oxyde d'éthylène et/ou l'oxyde de propylène.

6. Copolymère séquencé selon l'une quelconque des revendications précédentes, **caractérisé en ce que** le copolymère séquencé renferme au moins 50 % en poids de la séquence (A).

7. Copolymère séquencé selon l'une quelconque des revendications précédentes, **caractérisé en ce que** le copolymère séquencé renferme au plus 90 % en poids de la séquence (A).

8. Copolymère séquencé selon l'une quelconque des revendications précédentes, **caractérisé en ce que** le copolymère séquencé renferme au plus 50 % en poids de la séquence (B).

9. Copolymère séquencé selon l'une quelconque des revendications précédentes, **caractérisé en ce que** le copolymère séquencé renferme au moins 10 % en poids de la séquence (B).

10. Copolymère séquencé selon la revendication 1, **caractérisé en ce qu'**il renferme, en tant que seules séquences, des séquences (A) et au moins une séquence (B), la structure dudit copolymère séquencé étant choisie parmi :
- **(A)-{(B)-(A)}ₙ₁ ,** dans laquelle n₁ est un entier valant 1, 2, 3, 4, 5, 6, 7, 8, 9, 10 ou plus ;

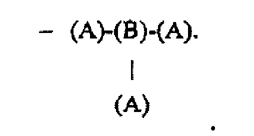

11. Copolymère séquencé selon la revendication 1, **caractérisé en ce qu'**il renferme, en tant que seules séquences, deux séquences (A) et une séquence (B).

12. Copolymère séquencé selon la revendication 1, **caractérisé en ce qu'**il s'agit d'un copolymère tri-séquence (A)-(O)-(B)-ρ-(A) de formule : 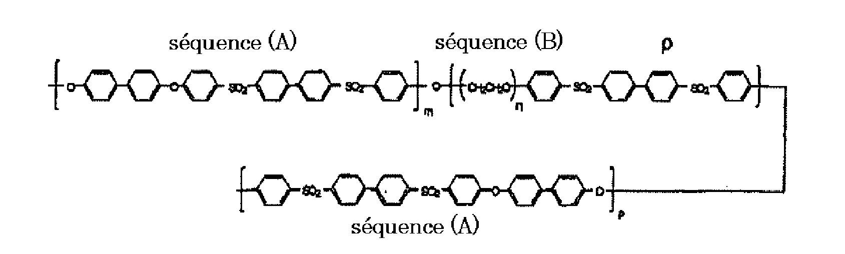 dans laquelle (B) est un groupe -(-CH₂-CH₂O-)-ₙ et ρ est un groupe -Phi-SO₂-Phi-Phi-SO₂-Phi-, Phi est un groupe phénylène,
avec des proportions pondérales (A):(B) de 55:45 à 90:10, et dans laquelle la séquence (B) présente un poids moléculaire moyen en nombre de 5 000 à 12 000, et où m, n et p sont des entiers supérieurs à zéro.

13. Procédé de synthèse du copolymère séquencé selon l'une quelconque des revendications précédentes, **caractérisé en ce que :**
- la séquence (A) est synthétisée par une chimie de déplacement nucléophile dans un solvant de polymérisation aprotique ;
- la séquence (B) est incorporée dans la séquence (A) par trans-éthérification.

14. Composition polymère comprenant le copolymère séquencé, selon l'une quelconque des revendications 1 à 12, et au moins un autre ingrédient.

15. Article comprenant le copolymère séquencé selon l'une quelconque des revendications 1 à 12 ou la composition polymère selon la revendication 14.

16. Article selon la revendication 15, **caractérisé en ce qu'**il s'agit d'une membrane.

17. Procédé de purification d'un liquide, **caractérisé en ce qu'**il comprend l'utilisation de l'article selon la revendication 16.

18. Procédé selon la revendication 17, **caractérisé en ce que** le liquide est l'eau.

19. Procédé de séparation de gaz, **caractérisé en ce qu'**il comprend l'utilisation de l'article selon la revendication 16.
